# EUROPEAN PATENT SPECIFICATION

(11) **EP 3 255 272 B1**
(45) Date of publication and mention of the grant of the patent: **29.01.2020**
(21) Application number: 15881197.6
(22) Date of filing: 03.12.2015
(51) Int. Cl.: F02M 21/02, C10K 1/04, C10K 1/18, F01N 5/02, F02B 37/00, F02M 31/06, F02M 31/08, F02M 31/20, F02M 31/00, F02M 31/10

(54) **BIOGAS ENGINE**
BIOGASMOTOR
MOTEUR À BIOGAZ

(30) Priority: 06.02.2015 JP 2015021993
(43) Date of publication of application: 13.12.2017
(73) Proprietor: Yanmar Co., Ltd., Osaka-shi, Osaka 530-8311 (JP)
(72) Inventor: WAKIZAKA Hiroaki, Osaka-shi Osaka 530-8311 (JP); MATSUMOTO Takeshi, Osaka-shi Osaka 530-8311 (JP); KANEDA Atsushi, Osaka-shi Osaka 530-8311 (JP)
(74) Representative: Hinkelmann, Klaus
(86) International application number: PCT/JP2015/084014
(87) International publication number: WO 2016/125380

(56) References cited:
- DE-B3-102011 083 120
- JP-A- 2012 007 582
- JP-B2- 4 223 696
- JP-B2- 4 986 042
- JP-B2- 4 986 042
- JP-B2- 5 314 719
- KR-A- 20120 084 375

## Description

### Technical Field

The present invention relates to a biogas engine that uses a biogas as a fuel for driving, the biogas produced by a biogas-producing gasifier.

### Background Art

A biogas engine that is driven with a biogas as a fuel produced by a biogas-producing gasifier is normally configured such that a mixed gas containing a biogas and air is combusted in a combustion chamber.

In such a biogas engine, for example, if a biogas that has been cooled to the dew point is mixed with air having a temperature lower than that of the biogas, a resulting mixed gas containing the biogas and the air has a temperature below the dew point, which causes the following inconveniences.

If a mixed gas containing a biogas and air has a temperature below the dew point, a water vapor contained in the mixed gas is condensed to generate condensed water (condensation), which raises a risk that component parts, e.g., a combustion chamber and a valve, contacted by the mixed gas might be rusted by the generated condensed water (condensation). If the temperature of a mixed gas containing a biogas and air is lowered to or below the condensation point of tar contained in the biogas, the tar is condensed and deposited, which raises a risk that the deposited tar might cause failures as exemplified by a malfunction of a movable member, e.g., a valve, contacted by the mixed gas (for example, a malfunction of hindrance of smooth movement of the movable member due to adherence of the tar). These are particularly pronounced when a biogas is mixed with ambient air in a cold region.

It is therefore necessary that a mixed gas containing a biogas and air be introduced to a combustion chamber with the temperature of the mixed gas being at or above the dew point such that neither condensation nor tar occurs.

Patent Literature 1 (PTL1) discloses a configuration in which heating means for heating room air is arranged in an intake passage of a gas engine that uses a crude gas as a fuel.

### Citation List

### Patent Literature

PTL1: Japanese Patent No. 5314719

The publication DE 10 2011 083 120 B3 discloses a mixture forming device for the mixing of air and synthesis gas to a gas mixture for combustion in a gas engine, with a Y-tube and a synthesis gas mixing nozzle, whereby the Y-tube comprises an intake air entry portion and first and second gas mixture outlet sections connected with one another by a branch portion of the Y-tube. The intake air entry portion is connectable with a suction pipe for sucking the air into first and second cylinders of the gas engine. The first and second gas mixture outlet sections are connectable with the first and second cylinder; and the synthesis gas mixing nozzle is arranged in a space which is defined by the intake air entry portion and the branch portion. In order to assure that the temperature of the biogas does not fall below the dew point of the biogas, a temperature adjusting device for controlling the temperature of a synthesis gas injection valve provides the synthesis gas mixing nozzle with the synthesis gas. The synthesis gas injection valve is heated to this purpose by means of a heat flange. The synthesis gas, after having passed through the synthesis gas injection valve and the heat flange, is then conducted through the synthesis gas mixing nozzle. Both, the synthesis gas and the compressed air arriving from an entrance opening are then injected into the mixture forming device to achieve an optimum mixing of both gas streams in the branch portion.

The publication JP 4 986 042 B2 relates according to an engine system matching with biomass fuel. The invention is to provide in particular an engine system matching with biomass fuel which firstly miniaturizes equipment and is excellent in cost, secondly improves a heat value of the biomass fuel, thirdly securely reduces and removes tar, fourthly carries out engine control matching with various fuels, and fifthly employs an injector capable of such a control and overcoming a capacity difficulty. As result, an engine system is provided that comprises a tar reforming reactor and a rotary engine, wherein the tar reforming reactor is supplied with a produced gas B obtained by charging the biomass A into a gasifying furnace. A reformed gas D is obtained by carrying out the steam reforming of contained tar C into hydrogen, carbon monoxide, carbon dioxide or the like.

The publication KR 2012 008 4375 A relates to a CNG engine cooler. A device for cooling a compressed natural gas engine is provided to control a flow rate of coolants passing through an oil cooler according to the temperature of the compressed natural gas. More particularly, a device for cooling a compressed natural gas engine comprises an oil cooler and a heat exchanger. The heat exchanger heats the compressed natural gas in a gas regulator for combustion. The heat exchanger comprises a plurality of fluid paths as a heater. The heat exchanger is integrally installed with a space between a case of a chiller and a heat exchange plate. The heat exchange plate forms an engine oil path of the oil cooler.

### Summary of Invention

### Technical Problem

The configuration shown in Patent Literature 1, however, merely provides backup measures that can be taken when the ambient air temperature is lower than a predetermined temperature. Patent Literature 1 provides no suggestion of a configuration that allows a mixed gas containing a biogas and air to be introduced to a combustion chamber with the temperature of the mixed gas being at or above the dew point.

An object of the present invention is to provide a biogas engine that uses as a fuel a biogas produced by a biogas-producing gasifier and combusts a mixed gas containing the biogas and air in a combustion chamber, the biogas engine allowing the mixed gas containing the biogas and air to be introduced to the combustion chamber with the temperature of the mixed gas being at or above the dew point so as to avoid occurrence of at least condensation of condensation and tar deposition.

### Solution to Problem

To accomplish the object described above, the present invention provides a biogas engine that uses a biogas as a fuel and combusts a mixed gas containing the biogas and air in a combustion chamber, the biogas produced by a biogas-producing gasifier, wherein: a biogas cooling unit is provided in a biogas supply path extending from the gasifier to the combustion chamber, the biogas cooling unit adjusting the temperature of the biogas; a mixing part is provided in an intake path through which the air is taken in, the mixing part mixing the air and the biogas whose temperature is adjusted by the biogas cooling unit; and a heat exchanger arranged between a pipe for engine waste heat and the intake path is provided in the intake path and upstream of the mixing part with respect to an intake direction of the air, the heat exchanger serving as a heating unit for heating the air sucked through the intake path so as to keep the temperature of the mixed gas at or above the dew point, wherein the biogas cooling unit comprises a gas cooler for washing the biogas with a washing liquid and cooling the biogas with a cooling water, and wherein the washing liquid is stored in a cirulating liquid tank for storing the washing liquid to be supplied to the gas cooler, and is then introduced to the gas cooler to wash the biogas in the gas cooler.

In an illustrative aspect of the present invention, engine waste heat may be used as a heat source of the heating unit for heating the air sucked through the intake path.

In an illustrative aspect of the present invention, a supercharger that increases pressure of the air to above atmospheric pressure may be provided, and the supercharger may be used as the heating unit for heating the air sucked through the intake path.

In an illustrative aspect of the present invention, the biogas cooling unit may be provided with an oil contact unit that brings oil into contact with the biogas.

### Advantageous Effects of Invention

The present invention can provide a biogas engine that uses as a fuel a biogas produced by a biogas-producing gasifier and combusts a mixed gas containing the biogas and air in a combustion chamber, the biogas engine allowing the mixed gas containing the biogas and air to be introduced to the combustion chamber with the temperature of the mixed gas being at or above the dew point so as to avoid occurrence of at least condensation of condensation and tar deposition.

### Brief Description of Drawings

[FIG. 1] FIG. 1 is a schematic configuration diagram showing an overall configuration of a biogas engine according to an embodiment of the present invention.
[FIG. 2] FIG. 2 is a graph illustrating the correlation between the H₂ content and the dew point of a mixed gas containing a biogas and air.
[FIG. 3] FIG. 3 contains illustrative diagrams illustrating specific aspects of a heating unit that heats air taken in through an intake path, in which: (a) is a schematic configuration diagram showing a first aspect of the heating unit according to an example; and (b) is a schematic configuration diagram showing a second aspect of the heating unit according to the example.
[FIG. 4] FIG. 4 is an illustrative diagram illustrating a specific aspect of a heating unit that heats air taken in through an intake path, and is a schematic configuration diagram showing the heating unit according to another example.

### Description of Embodiments

In the following, an embodiment of the present invention will be described with reference to the drawings.

Firstly a description will be given of an overall configuration of a biogas engine 100 (gas engine system) according to an embodiment of the present invention.

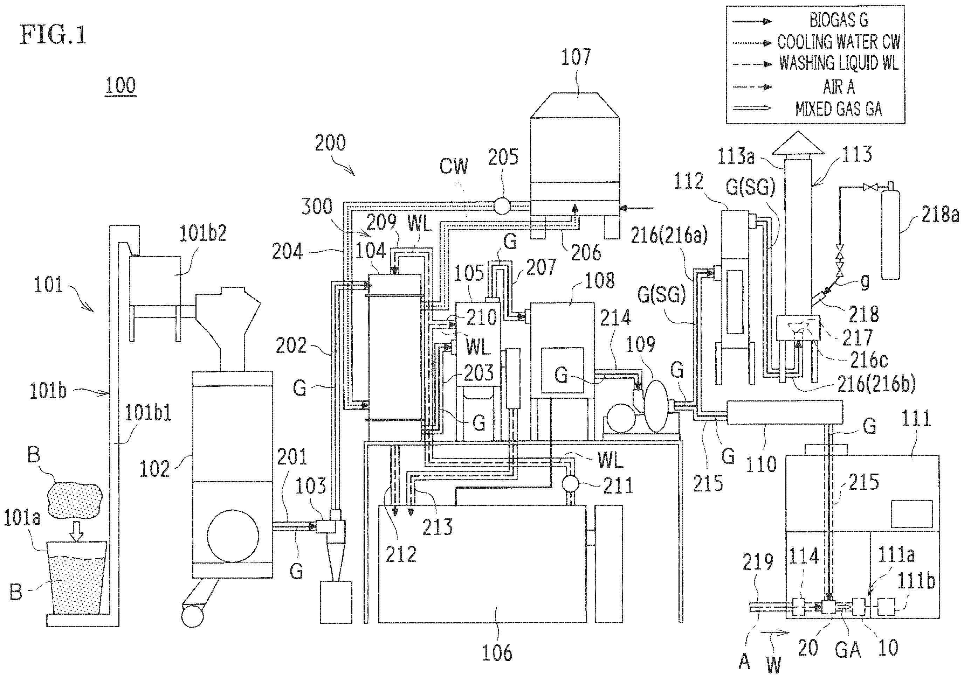

FIG. 1 is a schematic configuration diagram showing the overall configuration of the biogas engine 100 according to the embodiment of the present invention.

As shown in FIG. 1, the biogas engine 100 includes a raw material feeder 101, a gasifier 102, a cyclone 103, a gas cooler 104, a scrubber 105, a circulating liquid tank 106 (water tank), a cooling tower 107, a gas filter 108, an induction blower 109, a pretreatment unit 110, a combustion chamber 10 (which, in this example, is a combustion chamber of an engine generator apparatus 111), a water-sealed tank 112, and a surplus gas combustion apparatus 113 (flare stack).

The raw material feeder 101 includes an input hopper 101a that stores biomass B which is a raw material of biogas G, and a raw material input unit 101b that inputs the biomass B stored in the input hopper 101a to the gasifier 102.

Examples of the biomass include domestic animal wastes, food wastes, paper, black liquor, sewage sludge, wood-based wastes such as wood chippings, virgin materials, non-food products of agricultural crops such as rice hulls, and resource crops.

In this example, the raw material input unit 101b includes an input conveyor 101b1 and an input feeder 101b2. The input conveyor 101b1 conveys the biomass B stored in the input hopper 101a to the input feeder 101b2. The input feeder 101b2 inputs the biomass B conveyed by the input conveyor 101b1 to the gasifier 102.

The gasifier 102 produces the biogas G from the biomass B inputted by the raw material feeder 101. The cyclone 103 removes unwanted materials, such as relatively large-sized dusts, contained in the biogas G produced by the gasifier 102.

The gas cooler 104 is arranged in a biogas supply path extending from the gasifier 102 to the combustion chamber 10. The gas cooler 104 washes with a washing liquid WL the biogas G from which the unwanted materials have been removed by the cyclone 103, and additionally cools the biogas G with a cooling water CW. The scrubber 105 submerges the biogas G having been washed and cooled by the gas cooler 104 into a washing liquid WL, for further washing. The circulating liquid tank 106 stores the washing liquid WL to be supplied to the gas cooler 104 and the scrubber 105. The cooling tower 107 stores the cooling water CW to be supplied to the gas cooler 104.

The gas filter 108 removes by filtration unwanted materials, such as relatively small-sized dusts, contained in the biogas G having been washed by the scrubber 105. The induction blower 109 sucks the biogas G existing in a part of the biogas supply path on the gasifier 102 side, and discharges the sucked biogas G to a part of the biogas supply path on the combustion chamber 10 side and a part of the biogas supply path on the surplus gas combustion apparatus 113 side.

The pretreatment unit 110 removes impurities of the biogas G having been discharged from the induction blower 109 to the part of the biogas supply path on the combustion chamber 10 side. The combustion chamber 10 combusts the biogas G from which the impurities have been removed by the pretreatment unit 110.

The water-sealed tank 112 controls pressure of the biogas G having been discharged from the induction blower 109 to the part of the biogas supply path on the surplus gas combustion apparatus 113 side. The surplus gas combustion apparatus 113 combusts a surplus biogas SG which has not been supplied to the combustion chamber 10, the surplus biogas SG flowing into the surplus gas combustion apparatus 113 when pressure of the biogas G exceeds pressure of the water-sealed tank 112. The surplus gas combustion apparatus 113 is constantly supplied with a stream of a slight amount of biogas G which serves as a fuel for generating pilot flame in the surplus gas combustion apparatus 113, the stream being supplied through an unillustrated path that bypasses the water-sealed tank 112.

In the biogas engine 100 as thus far described, the raw material feeder 101 inputs the biomass B which is a solid carbonaceous material to the gasifier 102, and the gasifier 102 produces the combustible biogas G. The biogas G produced by the gasifier 102 flows through the cyclone 103, the gas cooler 104, the scrubber 105, the gas filter 108, and the induction blower 109 in this sequence, and diverges at downstream of the induction blower 109 into a stream on the combustion chamber 10 side and a stream on the surplus gas combustion apparatus 113 side. The biogas G is combusted in the combustion chamber 10, while the surplus biogas SG is combusted in the surplus gas combustion apparatus 113.

To be specific, the input hopper 101a stores the biomass B, and the biomass B stored in the input hopper 101a is inputted into the gasifier 102 by the input conveyor 101b1 and the input feeder 101b2 of the raw material input unit 101b.

The gasifier 102 produces the biogas G by incomplete combustion of the biomass B. The biogas G produced by the gasifier 102 is introduced to the cyclone 103 through a gas pipe 201. Here, the biogas G is a fuel gas mainly composed of carbon monoxide, and the biogas G contains unwanted materials such as soots, tar, and dusts.

The cyclone 103 removes by centrifugation unwanted materials such as relatively large-sized dusts contained in the biogas G. The biogas G from which unwanted materials such as relatively large-sized dusts have been removed by the cyclone 103 is introduced to the gas cooler 104 through a gas pipe 202.

The gas cooler 104 is provided therein with an unillustrated gas pipe for the biogas G to flow therethrough, and the biogas G in the gas pipe is washed with the washing liquid WL and cooled with the cooling water CW flowing around the gas pipe. The biogas G washed and cooled by the gas cooler 104 is introduced to the scrubber 105 through a gas pipe 203.

The cooling tower 107 stores the cooling water CW to be supplied to the gas cooler 104, and the cooling water CW stored in the cooling tower 107 is introduced to the gas cooler 104 through a water pipe 204. The cooling water CW in the water pipe 204 is pumped toward the gas cooler 104 by a pump 205, to cool the biogas G in the gas cooler 104. After cooling the biogas G, the cooling water CW is delivered to the cooling tower 107 through a water pipe 206.

In the gas cooler 104, the biogas G is cooled to the dew point or a temperature near the dew point. In this example, the gas cooler 104, the cooling tower 107, the cooling water CW, the water pipe 204, the pump 205, and the water pipe 206 constitute a biogas cooling unit 200.

The scrubber 105 stores the washing liquid WL. The biogas G is submerged into the washing liquid WL stored in the scrubber 105, to be washed. The biogas G washed by the scrubber 105 is introduced to the gas filter 108 through a gas pipe 207.

The circulating liquid tank 106 stores the washing liquid WL to be supplied to the gas cooler 104 and the scrubber 105. The washing liquid WL stored in the circulating liquid tank 106 is introduced to the gas cooler 104 through a liquid pipe 209, and also introduced to the scrubber 105 through a liquid pipe 210 which diverges from the liquid pipe 209. The washing liquid WL in the liquid pipes 209, 210 is pumped toward the gas cooler 104 and the scrubber 105 by a pump 211, to wash the biogas G in the gas cooler 104 and the scrubber 105. After washing the biogas G in the gas cooler 104, the washing liquid WL is delivered to the circulating liquid tank 106 through a liquid pipe 212, while after washing the biogas G in the scrubber 105, the washing liquid WL is delivered to the circulating liquid tank 106 through a liquid pipe 213. In this example, engine oil is used as the washing liquid. Using engine oil as the washing liquid that is directly contacted (mixed) with the biogas G enables less moisture to be added to the biogas G as compared with using water as the washing liquid. In this example, the circulating liquid tank 106, the pump 211, the liquid pipe 209, and the liquid pipe 212 constitute an oil contact unit 300. Here, it may be conceivable that the circulating liquid tank 106 is provided therein with a heating unit (e.g., a heater, an engine cooling water circuit, etc.) that heats the engine oil to prevent the biogas G from being cooled to the dew point.

The gas filter 108 removes by filtration unwanted materials, such as relatively small-sized dusts, contained in the biogas G. The biogas G from which unwanted materials such as relatively small-sized dusts have been removed by the gas filter 108 is introduced to the induction blower 109 through a gas pipe 214.

The induction blower 109 sucks the biogas G existing in a part of the biogas supply path upstream of the induction blower 109, and discharges the sucked biogas G to a part of the biogas supply path downstream of the induction blower 109. Thus, the part of the biogas supply path upstream of the induction blower 109 is under negative pressure whereas the part of the biogas supply path downstream of the induction blower 109 is under positive pressure, which causes the biogas G existing in the part of the biogas supply path upstream of the induction blower 109 to be induced into the part of the biogas supply path downstream of the induction blower 109.

Of the biogas G produced by the gasifier 102, the surplus biogas SG which has not been supplied to the combustion chamber 10 is introduced to the surplus gas combustion apparatus 113 through a surplus gas supply pipe 216 and the water-sealed tank 112 provided in the surplus gas supply pipe 216, the surplus gas supply pipe 216 diverging from a gas supply pipe 215 that supplies the biogas G from the induction blower 109 to the combustion chamber 10.

The surplus gas supply pipe 216 includes an upstream gas supply pipe 216a provided upstream of the water-sealed tank 112 and a downstream gas supply pipe 216b provided downstream of the water-sealed tank 112, the upstream gas supply pipe 216a connecting the induction blower 109 to the water-sealed tank 112, the downstream gas supply pipe 216b connecting the water-sealed tank 112 to the surplus gas combustion apparatus 113.

In the water-sealed tank 112, water is sealed to a predetermined water level. The water-sealed tank 112 applies water pressure to the surplus biogas SG discharged from the upstream gas supply pipe 216a, thereby controlling the amount of surplus biogas SG to be supplied from the water-sealed tank 112 to the surplus gas combustion apparatus 113 through the downstream gas supply pipe 216b. This is how the water-sealed tank 112 is able to control pressure of the biogas G in the gas supply pipe 215.

In the surplus gas combustion apparatus 113, the surplus biogas SG supplied through the upstream gas supply pipe 216a, the water-sealed tank 112, and the downstream gas supply pipe 216b is combusted by a surplus gas combustion unit 113a.

The surplus gas combustion apparatus 113 has the surplus gas combustion unit 113a (in this example, a surplus gas combustion tower) that combusts the surplus biogas SG. The surplus gas combustion unit 113a is installed with its longitudinal direction along a predetermined direction (in this example, the vertical direction). An end portion of the downstream gas supply pipe 216b on the surplus gas combustion apparatus 113 side is received in one end portion (in this example, a lower end portion) of the surplus gas combustion unit 113a. A burner part 217 (flame stabilizing baffle) is arranged within one end portion (in this example, the lower end portion) of the surplus gas combustion unit 113a. The end portion of the downstream gas supply pipe 216b on the surplus gas combustion apparatus 113 side, which is received in the surplus gas combustion unit 113a, is in communication with the burner part 217 arranged within the surplus gas combustion unit 113a.

The surplus gas combustion unit 113a has, on its side surface, an igniter (in this example, a pilot burner 218) that ignites the surplus biogas SG discharged from a discharge port 216c of the surplus gas supply pipe 216 (more specifically, the downstream gas supply pipe 216b). The pilot burner 218 is configured to supply a combustible gas g (in this example, propane gas), which serves as a fuel for igniting the surplus biogas SG, from the outside of the surplus gas combustion unit 113a to the inside of the surplus gas combustion unit 113a. The pilot burner 218 is connected to a gas cylinder 218a. The gas cylinder 218a supplies the combustible gas g to the pilot burner 218.

In the surplus gas combustion apparatus 113 having the above-described configuration, the surplus biogas SG that flows from the upstream gas supply pipe 216a through the water-sealed tank 112 to the downstream gas supply pipe 216b is introduced to the surplus gas combustion apparatus 113 and discharged from the burner part 217 arranged in one end portion (in this example, the lower end portion) of the surplus gas combustion unit 113a. The surplus biogas SG discharged from the burner part 217 is ignited for combustion by the pilot burner 218 provided on the side surface of the surplus gas combustion unit 113a, the ignition caused with use of pilot flame generated by the combustible gas g supplied from the gas cylinder 218a.

On the other hand, the biogas G induced by the induction blower 109 is introduced to the combustion chamber 10 of the engine generator apparatus 111 through the gas supply pipe 215 and the pretreatment unit 110 provided in the gas supply pipe 215. The combustion chamber 10 is supplied with the biogas G from which impurities have been removed by the pretreatment unit 110. In this embodiment, the engine generator apparatus 111 includes a gas engine part 111a that uses the biogas G as a fuel and that includes the combustion chamber 10 in which a mixed gas GA containing the biogas G and air A is combusted. In this example, the engine generator apparatus 111 including a generator part 111b driven by the gas engine part 111a is a cogeneration system in which power is generated by the generator part 111b and waste heat of the gas engine part 111a is used for supplying hot water, air conditioning, and the like.

The biogas engine 100 further includes a gas mixer 20 (gas mixing unit) that functions as a mixing part for mixing the biogas G, whose temperature has been adjusted by the biogas cooling unit 200, with the air A. The gas mixer 20 is arranged in an intake path 219 through which the air A is taken in.

### (Regarding heating unit)

Here, the biogas cooling unit 200 cools the biogas G to the dew point or a temperature near the dew point, and therefore if the air A to be mixed with the biogas G has a temperature lower than that of the biogas G, the temperature of the mixed gas GA containing the biogas G and the air A falls below the dew point, which causes the following inconveniences.

If the mixed gas GA containing the biogas G and the air A has a temperature below the dew point, a water vapor contained in the mixed gas GA is condensed to generate condensed water (condensation), which raises a risk that component parts, e.g., the combustion chamber 10 and a valve, contacted by the mixed gas GA might be rusted by the generated condensed water (condensation). If the temperature of the mixed gas GA containing the biogas G and the air A is lowered to or below the condensation point of tar contained in the biogas G, the tar is condensed and deposited, which raises a risk that the deposited tar might cause failures as exemplified by a malfunction of a movable member, e.g., a valve, contacted by the mixed gas GA (for example, a malfunction of hindrance of smooth movement of the movable member due to adherence of the tar). These are particularly pronounced when the biogas G is mixed with ambient air (outdoor air A) in a cold region.

In this respect, the biogas engine 100 of this embodiment includes a heating unit 114 that heats the air A sucked through the intake path 219 so as to keep the temperature of the mixed gas GA at or above the dew point. The heating unit 114 is arranged in the intake path 219 and upstream of the gas mixer 20 with respect to an intake direction W of the air A.

The biogas engine 100 of this embodiment, in which the heating unit 114 for heating the air A sucked through the intake path 219 so as to keep the temperature of the mixed gas GA containing the biogas G and the air A at or above the dew point is arranged in the intake path 219 and upstream of the gas mixer 20 with respect to the intake direction W of the air A, is able to introduce the mixed gas GA to the combustion chamber 10 with the temperature of the mixed gas GA being at or above the dew point, because the air A sucked through the intake path 219 is heated by the heating unit 114 such that the temperature of the mixed gas GA is kept at or above the dew point. Accordingly, water vapor contained in the mixed gas GA is not condensed so that occurrence of condensed water (condensation) is avoided, thus providing effective prevention of rusting of component parts, e.g., the combustion chamber 10 and a valve, contacted by the mixed gas GA. In addition, the condensation point of tar contained in the biogas G is equal to or lower than the dew point, and the temperature of the mixed gas GA containing the biogas G and the air A is equal to or higher than the condensation point of tar contained in the biogas G. Accordingly, tar is not condensed so that deposition of tar is avoided, thus providing effective prevention of occurrence of failures as exemplified by a malfunction of a movable member, e.g., a valve, contacted by the mixed gas GA (for example, a malfunction of hindrance of smooth movement of the movable member due to adherence of the tar). These are particularly effective when the biogas G is mixed with ambient air (outdoor air A) in a cold region.

There is a certain correlation between the H₂ (hydrogen) content in the mixed gas GA containing the biogas G and the air A and the dew point thereof under a condition that moisture in the raw material of the biogas G is fixed.

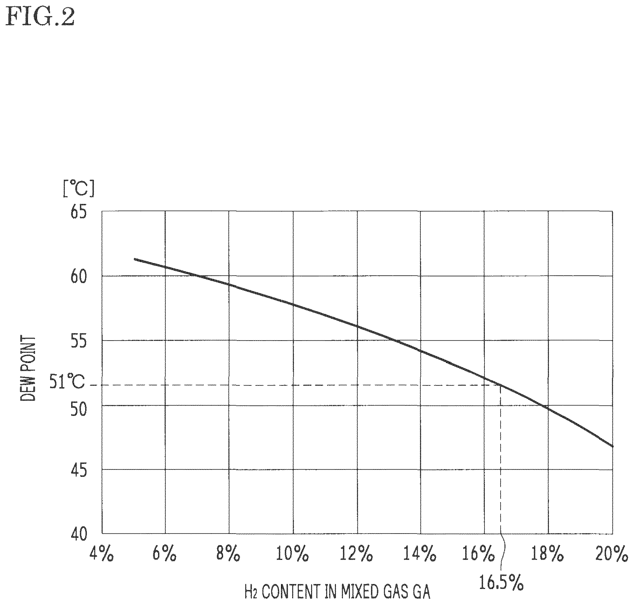

FIG. 2 is a graph showing the correlation between the H₂ content in the mixed gas GA containing the biogas G and the air A and the dew point thereof.

It can be seen from FIG. 2 that there is a certain correlation between the H₂ content in the mixed gas GA and the dew point thereof. For example, when the H₂ content in the mixed gas GA is 16.5%, the dew point is 51°C.

In the biogas engine 100 of this embodiment, for example, the correlation (see FIG. 2) between the H₂ content in the mixed gas GA and the dew point thereof is obtained beforehand by an experiment, etc., for use in heating the air A sucked through the intake path 219 with the heating unit 114. The H₂ content (e.g., 16.5%) in the mixed gas GA is pre-measured, and the correlation (see FIG. 2) obtained beforehand by the experiment, etc., is used to pre-obtain the dew point (e.g., 51°C) based on the measured H₂ content (e.g., 16.5%). In the biogas engine 100 of this embodiment, the degree of heating with the heating unit 114 is preset so as to keep the temperature of the mixed gas GA at or above the pre-obtained dew point (e.g., 51°C). This enables the heating unit 114, for which the degree of heating is preset, to heat the air A sucked through the intake path 219 so as to keep the temperature of the mixed gas GA at or above the dew point.

The biogas engine 100 of this embodiment may be configured such that: a storage device and a control device are provided; dew points are pre-stored in the storage device; and the control device uses the dew points stored in the storage device, to control operations of the heating unit 114, thereby adjusting the degree of heating with the heating unit 114. That is, the control device may be configured to control operations of the heating unit 114 such that the air A sucked through the intake path 219 is heated so as to keep the temperature of the mixed gas GA at or above the dew point. It may also be conceivable that a temperature detector for detecting the temperature of the mixed gas GA is provided, and the control device controls operations of the heating unit 114 based on a detection result of the temperature detector, and more specifically, so as to keep the temperature of the mixed gas GA at or above the dew point, thereby adjusting the degree of heating with the heating unit 114. The control device may be configured to obtain the dew point as follows. A conversion element (e.g., a conversion table or a conversion formula) that is based on the correlation (see FIG. 2) between the H₂ content in the mixed gas GA and the dew point thereof is pre-stored in the storage device, and the control device uses the H₂ content as a parameter to obtain the dew point based on the conversion element stored in the storage device.

### (Specific aspect of heating unit)

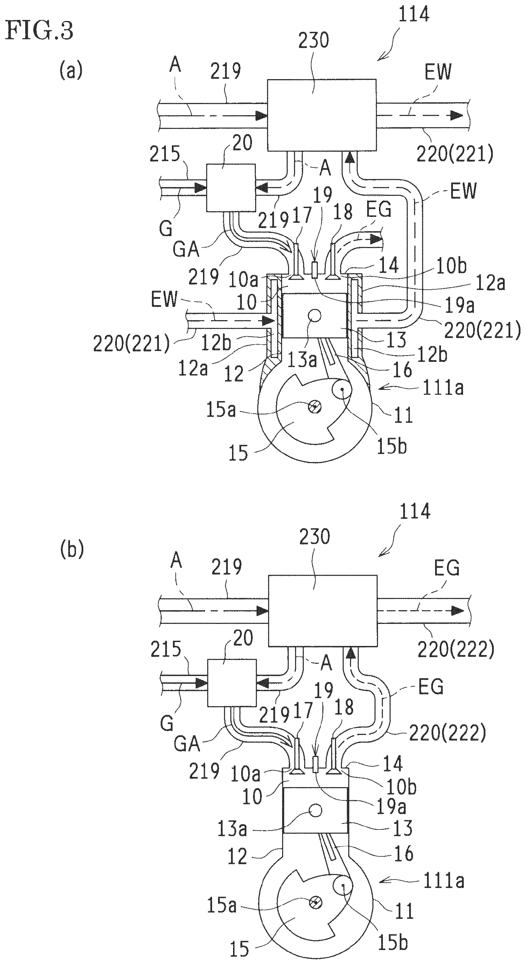

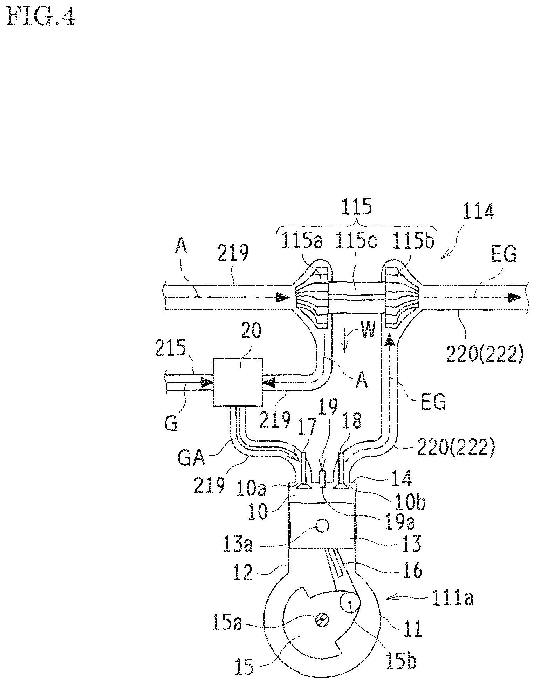

FIGs. 3 and 4 are illustrative diagrams each illustrating a specific aspect of the heating unit 114 that heats the air A taken in through the intake path 219.

### (Configurations of engine part)

A description will be given of configurations of the gas engine part 111a shown in FIGs. 3 and 4, which is included in the biogas engine 100 of this embodiment.

The gas engine part 111a shown in FIGs. 3 and 4 includes a crank case 11, a cylinder 12, a piston 13, a cylinder head 14, a crankshaft 15, a connecting rod 16, an intake valve 17, an exhaust valve 18, and a spark plug 19.

The crankshaft 15 is housed in the crank case 11 so as to be rotatable about its rotation axis 15a. The connecting rod 16 has one end thereof coupled to a crank pin 15b of the crankshaft 15 in a freely rotatable manner, the crank pin arranged in a position offset from the rotation axis 15a. The connecting rod 16 has the other end thereof coupled to a piston pin 13a of the piston 13 in a freely rotationally movable manner.

The piston 13 is movable to and fro in the cylinder 12. The connecting rod 16 transmits the to-and-fro movement of the piston 13 to the crankshaft 15, so that the crankshaft 15 is rotated. The combustion chamber 10 is defined by the cylinder 12, the piston 13, and the cylinder head 14. The intake valve 17, the exhaust valve 18, and the spark plug 19 are attached to the cylinder head 14.

The intake valve 17 is configured to open an intake port 10a at a predetermined intake timing and close the intake port 10a at a predetermined exhaust timing, the intake port 10a having its mouth opening into the combustion chamber 10. The exhaust valve 18 is configured to open an exhaust port 10b at a predetermined exhaust timing and close the exhaust port 10b at a predetermined intake timing, the exhaust port 10b having its mouth opening into the combustion chamber 10. The spark plug 19 includes a discharger 19a that discharges electricity in the combustion chamber 10 at a predetermined combustion timing, so that the mixed gas GA, which is obtained by mixing of the biogas G with the air A in the gas mixer 20 and taken into the combustion chamber 10 through the intake path 219, is ignited by the discharging of the discharger 19a.

### (Example of heating unit)

In this embodiment, it may be conceivable to adopt a special heat source such as a heater as the heating unit 114 for heating the air A sucked through the intake path 219, but this requires a special component part and causes extra energy consumption.

In view of the above, specific aspects as shown in FIG. 3 are adoptable for the heating unit 114 of the biogas engine 100 of this embodiment.

FIG. 3(a) is a schematic configuration diagram showing a first aspect of the heating unit 114 according to an example, and FIG. 3(b) is a schematic configuration diagram showing a second aspect of the heating unit 114 according to the example.

In the example of the heating unit 114 shown in FIGs. 3(a) and 3(b), engine waste heat is used as a heat source of the heating unit 114 for heating the air A sucked through the intake path 219.

In this example, used as the engine waste heat are heat of an engine cooling water EW that cools the gas engine part 111a (see FIG. 3(a)) and heat of an exhaust gas EG that is discharged from the gas engine part 111a (see FIG. 3(b)).

More specifically, in the first aspect shown in FIG. 3(a), a configuration using the engine waste heat is achieved by providing a heat exchanger 230 between the intake path 219 and a pipe 220 for the engine waste heat (in this example, a pipe 221 for the engine cooling water EW).

In the second aspect shown in FIG. 3(b), the configuration using the engine waste heat is achieved by providing the heat exchanger 230 between the intake path 219 and a pipe 220 for the engine waste heat (in this example, a pipe 222 for the exhaust gas EG).

In the first aspect shown in FIG. 3(a), the cylinder 12 is provided with a cylinder block 12a including a water jacket 12b through which the engine cooling water EW passes, and the pipe 221 having an annular shape is connected to the water jacket 12b. The pipe 221 is provided with an engine cooling water pump, though not shown, and the engine cooling water pump circulates the engine cooling water EW in the pipe 221.

In the first aspect shown in FIG. 3(a), the degree of heating with the heating unit 114 can be set by, for example, adjustment of the rotational frequency of an engine cooling water pump which is not shown or the degree of opening of an engine cooling water flow valve which is not shown. In the second aspect shown in FIG. 3(b), the degree of heating with the heating unit 114 can be set by, for example, adjustment of the degree of opening of an exhaust gas flow valve which is not shown.

In any case, as the heat exchanger 230, conventionally known one is adoptable, and a detailed description is omitted herein. It may be acceptable to combine the first aspect and the second aspect to configure the heating unit 114.

Using the engine waste heat as a heat source of the heating unit 114 for heating the air A sucked through the intake path 219, which enables utilization of the engine waste heat, can eliminate the need to provide a special heat source and also can avoid extra energy consumption.

### (Another example of heating unit)

FIG. 4 is a schematic configuration diagram showing another example of the heating unit 114.

In this embodiment, the biogas engine 100 may be provided with a supercharger 115 for increasing pressure of the air A to above atmospheric pressure.

In another example of the heating unit 114 shown in FIG. 4, the supercharger 115 is used as the heating unit 114 for heating the air A sucked through the intake path 219.

The supercharger 115 includes a compressor 115a, and the compressor 115a is arranged in the intake path 219 and upstream of the gas mixer 20 with respect to the intake direction W of the air.

In this embodiment, the supercharger 115 is a turbocharger that utilizes pressure (exhaust pressure) of the exhaust gas EG.

To be more specific, the supercharger 115 is provided between the intake path 219 and the pipe 220 for the engine waste heat (in this example, the pipe 222 for the exhaust gas EG).

The supercharger 115 includes the compressor 115a arranged in the intake path 219, a turbine 115b arranged in the pipe 222 for the exhaust gas EG, and a coupling shaft 115c for coupling them.

In the supercharger 115, upon rotation of the turbine 115b caused by pressure of the exhaust gas EG flowing through the pipe 222 for the exhaust gas EG, the coupling shaft 115c transmits the rotation to the compressor 115a. This makes the compressor 115a rotate, so that the air A in the intake path 219 is compressed and sent to the gas mixer 20. This is how to increase the temperature of the air A sucked through the intake path 219.

In another example of the heating unit 114 shown in FIG. 4, the degree of heating can be set by, for example, adjustment of the degree of opening of an exhaust gas flow valve which is not shown.

As thus far described, using the supercharger 115 (in this example, a turbocharger) as the heating unit 114 for heating the air A sucked through the intake path 219 enables the temperature of the air A sucked through the intake path 219 to be readily increased due to effects of the supercharger 115 compressing the air A. In addition, the biogas engine 100 including the supercharger 115 is, by using the supercharger 115 as the heating unit 114, able to utilize pressure (in this example, pressure of the exhaust gas EG) involved in engine driving to increase the temperature of the air A, thereby eliminating the need to provide a special heat source and also avoiding extra energy consumption.

One example of the heating unit 114 as shown in FIG. 3 and another example of the heating unit 114 as shown in FIG. 4 may be combined.

### Industrial Applicability

The present invention relates to a biogas engine that uses a biogas as a fuel and combusts a mixed gas containing the biogas and air in a combustion chamber, the biogas produced by a biogas-producing gasifier, and is particularly applicable for the purpose of introducing the mixed gas containing the biogas and air to the combustion chamber with the temperature of the mixed gas being at or above the dew point so as to avoid occurrence of at least condensation of condensation and tar.

### Reference Signs List

- 10: combustion chamber
- 10a: intake port
- 10b: exhaust port
- 11: crank case
- 12: cylinder
- 12a: cylinder block
- 12b: water jacket
- 13: piston
- 13a: piston pin
- 14: cylinder head
- 15: crankshaft
- 15a: rotation axis
- 15b: crank pin
- 16: connecting rod
- 17: intake valve
- 18: exhaust valve
- 19: spark plug
- 19a: discharger
- 20: gas mixer (one example of mixing part)
- 100: biogas engine
- 101: raw material feeder
- 101a: input hopper
- 101b: raw material input unit
- 101b1: input conveyor
- 101b2: input feeder
- 102: gasifier
- 103: cyclone
- 104: gas cooler
- 105: scrubber
- 106: circulating liquid tank
- 107: cooling tower
- 108: gas filter
- 109: induction blower
- 110: pretreatment unit
- 111: engine generator apparatus
- 111a: gas engine part
- 111b: generator part
- 112: water- sealed tank
- 113: surplus gas combustion apparatus
- 113a: surplus gas combustion unit
- 114: heating unit
- 115: supercharger
- 115a: compressor
- 115b: turbine
- 115c: coupling shaft
- 200: biogas cooling unit
- 217: burner part
- 218: pilot burner
- 218a: gas cylinder
- 219: intake path
- 220: pipe for engine waste heat
- 221: pipe for engine cooling water
- 222: pipe for exhaust gas
- 230: heat exchanger
- 300: oil contact unit
- A: air
- B: biomass
- CW: cooling water
- EG: exhaust gas
- EW: engine cooling water
- G: biogas
- GA: mixed gas
- SG: surplus biogas
- W: intake direction
- WL: washing liquid

## Claims

1. A biogas engine (100) that uses a biogas as a fuel and combusts a mixed gas containing the biogas and air in a combustion chamber (10), the biogas produced by a biogas-producing gasifier (102), wherein
a biogas cooling unit (200) is provided in a biogas supply path (201,202, 203,207,214,215) extending from the gasifier (102) to the combustion chamber (10), the biogas cooling unit (200) adjusting the temperature of the biogas (G),
a mixing part (20) is provided in an intake path (219) through which the air is taken in, the mixing part (20) mixing the air and the biogas (G) whose temperature is adjusted by the biogas cooling unit (200), and
a heat exchanger (230) arranged between a pipe (220,221,222) for engine waste heat (EW, EG) and the intake path (219) is provided in the intake path (219) and upstream of the mixing part (20) with respect to an intake direction (W) of the air (A), the heat exchanger (230) serving as a heating unit (114) for heating the air sucked through the intake path (219) so as to keep the temperature of the mixed gas (GA) at or above the dew point,
wherein the biogas cooling unit (200) comprises a gas cooler (104) for washing the biogas (G) with a washing liquid (WL) and cooling the biogas (G) with a cooling water (CW), and
wherein the washing liquid (WL) is stored in a circulating liquid tank (106) for storing the washing liquid (WL) to be supplied to the gas cooler (104), and is then introduced to the gas cooler (104) to wash the biogas (G) in the gas cooler (104).

2. The biogas engine (100) according to claim 1, wherein
the biogas cooling unit (200) is provided with an oil contact unit (300) that brings oil into contact with the biogas.

## Patentansprüche

1. Ein Biogasmotor (100), der ein Biogas als einen Brennstoff benutzt und ein gemischtes Gas, welches das Biogas und Luft enthält, in einer Verbrennungskammer (10) verbrennt, wobei das Biogas durch einen Biogas produzierenden Vergaser (102) hergestellt wird, worin
eine Biogas Abkühlungseinheit (200) in einem Versorgungsweg (201,202, 203,207,214,215) für das Biogas bereitgestellt ist, der sich von dem Vergaser (102) bis zur Verbrennungskammer (10) erstreckt, wobei die Biogas Abkühlungseinheit (200) die Temperatur des Biogases (G) einstellt,
ein Mischungsteil (20) bereitgestellt ist in einem Einlasspfad (219), durch welchen die Luft aufgenommen wird, wobei im Mischungteil (20) die Luft und das Biogas (G), dessen Temperatur durch die Biogas Abkühlungseinheit (200) eingestellt wird, gemischt werden, und
ein Wärmetauscher (230), der zwischen einem Rohr (220,221,222) für die Abwärme (EW, EG) des Motors und dem Einlasspfad (219) angeordnet ist, wird in dem Einlasspfad (219) und stromaufwärts von dem Mischungsteil (20) bezogen auf eine Einlassrichtung (W) der Luft (A) bereitgestellt ist, wobei der Wärmetauscher (230) als eine Heizeinheit (114) für das Erhitzen der durch den Einlasspfad (219) angesaugten Luft fungiert, um die Temperatur des gemischten Gases (GA) am oder über dem Taupunkt zu halten,
worin die Biogas Abkühlungseinheit (200) einen Gaskühler (104) für das Waschen des Biogases (G) mit einer Waschflüssigkeit (WL) und das Abkühlen des Biogases (G) mit einem Kühlwasser (CW) umfasst, und
worin die Waschflüssigkeit (WL) in einem Zirkulierungswasser - Tank (106) für die Speicherung der Waschflüssigkeit (WL), welches an den Gaskühler (104) geliefert werden soll, gespeichert wird und dann in den Gaskühler (104) eingeführt wird, um das Biogas (G) in dem Gaskühler (104) zu waschen.

2. Der Biogasmotor (100) nach Anspruch 1, worin
die Biogas Abkühlungseinheit (200) mit einer Ölkontaktierungseinheit (300) ausgestattet wird, welche Öl in Kontakt mit dem Biogas bringt.

## Revendications

1. Moteur à biogaz (100) qui utilise un biogaz en tant que carburant et effectue la combustion d'un gaz de mélange contenant du biogaz et de l'air dans une chambre de combustion (10), le biogaz étant produit par un gazéificateur (102) produisant du biogaz, où
une unité de refroidissement (200) de biogaz est mise en place dans une voie d'alimentation de biogaz (201, 202, 203, 207, 214, 215) s'étendant à partir du gazéificateur (102) à la chambre de combustion (10), l'unité de refroidissement (200 de biogaz réglant la température du biogaz (G),
une unité de mélange (20) est mise en place dans une voie d'admission (219) à travers laquelle l'air est prélevé, l'unité de mélange (20) mélangeant l'air et le biogaz (G) dont la température est réglée par l'unité de refroidissement (200) de biogaz, et
un échangeur de chaleur (230) agencé entre une conduite (220, 221, 222) pour de la chaleur perdue du moteur (EW, EG) et la voie d'admission (219) est mise en place dans la voie d'admission (219) et en amont de l'unité de mélange (20) par rapport à une direction d'admission (W) de l'air (A), l'échangeur de chaleur (230) servant d'unité de chauffage (114) pour chauffer l'air aspiré à travers la voie d'admission (219) de sorte à conserver la température du gaz de mélange (GA) au point de rosée ou au-dessus,
où l'unité de refroidissement (200) de biogaz comprend un refroidisseur de gaz (104) pour laver le biogaz (G) avec un liquide de lavage (WL) et refroidir le biogaz (G) avec de l'eau de refroidissement (CW), et
où le liquide de lavage (WL) est stocké dans un réservoir de liquide de circulation (106) pour stocker le liquide de lavage (WL) devant être alimenté dans le refroidisseur de gaz (104), et est ensuite introduit dans le refroidisseur de gaz (104) pour laver le biogaz (G) dans le refroidisseur de gaz (104).

2. Moteur à biogaz (100) selon la revendication 1, dans lequel
l'unité de refroidissement (200) de biogaz est mise en place avec une unité de contact d'huile (300) qui met de l'huile en contact avec le biogaz.
